# EUROPEAN PATENT APPLICATION

(11) **EP 4 425 618 A1**
(43) Date of publication of application: **04.09.2024**
(21) Application number: 23802479.8
(22) Date of filing: 10.03.2023
(51) Int. Cl.: H01M 4/74

(54) **NEGATIVE ELECTRODE SHEET, PREPARATION METHOD THEREFOR, AND RELATED DEVICE**

(30) Priority: 07.05.2022 CN 202210490199
(71) Applicant: Contemporary Amperex Technology Co., Limited, Ningde, Fujian 352100 (CN)
(72) Inventor: CHEN, Yujie, Ningde, Fujian 352100 (CN); GE, Xiaoming, Ningde, Fujian 352100 (CN); FAN, Yulei, Ningde, Fujian 352100 (CN)
(74) Representative: Gong, Jinping
(86) International application number: PCT/CN2023/080687
(87) International publication number: WO 2023/216703

(57) **Abstract**

Some embodiments of this application disclose a negative electrode plate, and a method for preparing same, and related devices. The negative electrode plate includes a current collector. The current collector is made of a foamed metal material. The current collector includes a first region, a second region, and a third region arranged sequentially along a first direction. An interior of the first region is provided with a negative active material. The second region is filled with an insulation material. The third region is provided with no negative active material. The technical solution hereof ensures that no metal particles are deposited in a tab region in a battery that uses foamed metal as a negative electrode, thereby avoiding a short circuit of a battery cell caused by dendrites arising from surplus metal particles deposited in the tab region, and in turn, enhancing safety performance of the battery. In addition, the tab region can maintain metal properties to facilitate welding and maintain a high flow capacity.

## Description

### CROSS-REFERENCE TO RELATED APPLICATIONS

This application claims priority to Chinese Patent Application No. 202210490199.5, filed on May 7, 2022 and entitled "NEGATIVE ELECTRODE PLATE AND METHOD FOR PREPARING SAME, AND RELATED DEVICES", which is incorporated herein by reference in its entirety.

### TECHNICAL FIELD

This application relates to the technical field of batteries, and in particular, to a negative electrode plate, a method for preparing the negative electrode plate, an electrode assembly, a battery cell, a battery, and an electrical device.

### BACKGROUND

With the aggravation of environmental pollution, the new energy industry is attracting more and more attention. Battery technology is crucial to the development of the new energy industry.

In the development of battery technology, how to enhance the safety performance of a battery is an urgent technical problem in the battery technology.

### SUMMARY

In view of the problems above, some embodiments of this application provide a negative electrode, a method for preparing the negative electrode plate, an electrode assembly, a battery cell, a battery, and an electrical device, and ensure that no metal particles are deposited in a tab region in a battery that uses foamed metal as a negative electrode. This avoids a short circuit of a battery cell caused by dendrites arising from surplus metal particles deposited in the tab region, and in turn, enhances safety performance of the battery. In addition, the tab region can maintain metal properties to facilitate welding and maintain a high flow capacity.

According to a first aspect, a negative electrode plate is provided, including a current collector. The current collector is made of a foamed metal material. The current collector includes a first region, a second region, and a third region arranged sequentially along a first direction. An interior of the first region is provided with a negative active material. The second region is filled with an insulation material. The third region is provided with no negative active material.

In an embodiment of this application, the first region, the second region, and the third region are arranged sequentially along the first direction. The interior of the first region is provided with the negative active material to facilitate metal nucleation and growth inside the first region. The second region is filled with the insulation material so that the second region physically isolates the first region from the third region. The third region is provided with no negative active material so that the third region maintains the metal properties. The negative electrode plate is divided into three different regions, and the second region filled with the insulation material is located between the first region and the third region to isolate the first region from the third region, thereby ensuring that no metal particles are deposited in a tab region in a battery that uses foamed metal as a negative electrode, avoiding a short circuit of a battery cell caused by dendrites arising from surplus metal particles deposited in the tab region, and in turn, enhancing safety performance of the battery. In addition, the tab region can maintain metal properties to facilitate welding and maintain a high flow capacity.

In a possible embodiment, a surface of the first region is covered with the insulation material.

In this embodiment of this application, the interior of the first region is provided with the negative active material to facilitate growth of metal particles inside the first region. In a battery cell that uses foamed metal as a negative electrode, metal particles are more easily grown on the surface of the first region than in the interior of the first region, and the metal particles are deposited only on the surface of the first region. By covering the surface of the first region with the insulation material, the metal particles are deposited only in the interior of the first region, and the metal particles are prevented from depositing on the surface, thereby preventing a separator from being pierced by dendrites arising from surplus metal particles deposited on the surface of the first region, and in turn, enhancing safety performance of the battery cell.

In a possible embodiment, the insulation material is aluminum oxide or zirconium oxide.

In this embodiment of this application, in order to prevent the separator from being pierced by the dendrites formed by surplus metal particles deposited on the surface of the first region, the surface of the first region is covered with the insulation material so that the metal particles are not deposited on the surface but are deposited in the interior of the first region. Both aluminum oxide and zirconium oxide are materials of high insulation properties and high stability in all aspects. The surface of the first region covered with aluminum oxide and zirconium oxide can effectively prevent the metal particles from depositing on the surface of the first region.

In a possible embodiment, a width of the second region in the first direction is not less than a thickness of the current collector.

In this embodiment of this application, the second region is filled with the insulation material to isolate the first region from the third region and prevent the metal particles deposited in the interior of the first region from entering the third region. If the width of the second region is less than the thickness of the current collector, the metal particles may still deposit in the third region, and metal dendrites may still grow in the third region. In other words, if the width of the second region in the first direction is less than the thickness of the current collector, the second region is unable to effectively isolate the first region from the third region. By controlling the width of the second region in the first direction to be not less than the thickness of the current collector, this application allows the second region to more effectively isolate the first region from the third region, so as to ensure that no metal particles are deposited in the third region.

In a possible embodiment, in the first direction, a width of the second region is not greater than 10% of a width of the first region.

In this embodiment of this application, in order for the second region to more effectively isolate the first region from the third region, the width of the second region in the first direction is not less than the thickness of the current collector. However, when the width of the second region in the first direction is unduly large, the surplus current collector material will be wasted, thereby increasing the cost of the battery cell and decreasing the energy density. Therefore, in the first direction, the width of the second region is controlled to be not greater than 10% of the width of the first region. In this way, the second region can well isolate the first region from the third region to prevent metal particles from depositing in the third region. In addition, waste of surplus current collector material is avoided, so as to ensure relatively low production cost and a relatively high energy density of the battery cell.

In a possible embodiment, in the first direction, a width of the third region is not greater than 20% of a width of the first region.

In this embodiment of this application, if the width of the third region in the first direction is unduly large, the surplus current collector material will be wasted, thereby increasing the cost of the battery cell and decreasing the energy density. Therefore, in the first direction, the width of the third region is controlled to be not greater than 20% of the width of the first region. In this way, waste of surplus current collector material is avoided, so as to ensure relatively low production cost and a relatively high energy density of the battery cell.

In a possible embodiment, the second region includes a first part and a second part. The first part and the first region form a main body of the electrode plate. The second part and the third region form a tab of the electrode plate. A width of the first part in the first direction is not greater than a half of a thickness of the electrode plate.

In this embodiment of this application, in order to prevent a short circuit in the tab region, facilitate welding, and maintain a high flow capacity, the tab needs to include a part of the second region and third region. The second region includes a first part and a second part. The first part is located in the main region of the electrode plate. The second part is located in the tab region of the electrode plate. If the width of the first part included in the main region in the first direction is not greater than a half of the thickness of the electrode plate, the first part of the main region is unable to truly protect the third region. Therefore, the width of the first part of the second region in the first direction is controlled to be not less than a half of the thickness of the electrode plate, so as to prevent the metal particles from depositing in the third region, facilitate welding of the tab, and maintain a high flow capacity.

In a possible embodiment, a width of the first part in the first direction is not less than 6 µm.

In this embodiment of this application, the second region interiorly filled with an insulation material includes a first part and a second part. The first part is located in the main region of the electrode plate. The second part is located in the tab region of the electrode plate. If the width of the first part included in the main region in the first direction is less than 6 µm, the first part of the main region is unable to truly protect the third region. Therefore, the width of the first part of the second region in the first direction is controlled to be not less than 6 µm, so as to prevent the metal particles from depositing in the third region, facilitate welding of the tab, and maintain a high flow capacity.

In a possible embodiment, in the first direction, the width of the first part is not greater than 5% of a width of the first region.

In this embodiment of this application, in order for the first part to more effectively isolate the first region from the tab, the width of the first part in the first direction is not less than the thickness of the current collector, and not less than 6 µm. However, when the width of the first part in the first direction is unduly large, the surplus current collector material will be wasted, thereby increasing the cost of the battery cell and decreasing the energy density. Therefore, in the first direction, the width of the first part is controlled to be not greater than 5% of the width of the first region. In this way, the first part can well isolate the first region from the tab to prevent metal particles from depositing in the third region. In addition, waste of surplus current collector material is avoided, so as to ensure relatively low production cost and a relatively high energy density of the battery cell.

In a possible embodiment, the electrode plate includes two sections of the second region. The two sections of the second region are distributed on two sides of the first region respectively.

In this embodiment of this application, the positive electrode in the battery cell wraps the negative electrode. To be specific, the positive electrode completely wraps the first region in the negative electrode, so that the edge of the positive electrode laps the second region of the negative electrode. For convenience in the production process, the electrode plate may include two sections of the second region. The two sections of the second region are distributed on two sides of the first region respectively. In this way, the matching manner between the negative electrode and the positive electrode is not particularly limited, thereby saving production cost and improving production efficiency.

In a possible embodiment, the foamed metal is foamed copper.

In this embodiment of this application, the foamed metal is used as a negative electrode material of the battery cell. The foamed metal being foamed copper means that foamed copper is used as a negative electrode material of the battery cell. When the foamed copper is used as the negative electrode material of the battery cell, the performance of the battery cell can be enhanced.

In a possible embodiment, a thickness of the electrode plate is 50 µm to 400 µm.

In this embodiment of this application, the thickness of the electrode plate is kept between 50 µm to 400 µm, thereby providing sufficient deposition space for the metal particles, and maintaining good performance of the battery cell.

According to a second aspect, a method for preparing a negative electrode plate is provided. The method includes: providing a current collector, where the current collector includes a first region, a second region, and a third region arranged sequentially along a first direction, and the current collector is made of a foamed metal material; disposing a first insulation material in the first region, filling the second region with a second insulation material, and disposing a third insulation material in the third region; removing the first insulation material from the first region, and disposing a negative active material in an interior of the first region; and removing the third insulation material from the third region to obtain a negative electrode plate provided with the negative active material in the interior of the first region, filled with the second insulation material in the second region, and provided with no negative active material in the third region.

In this embodiment of this application, the interior of the first region is provided with the negative active material to facilitate metal nucleation and growth inside the first region. The second region is filled with the second insulation material so that the second region isolates the first region from the third region to prevent metal particles from depositing in the third region. The third region is provided with no negative active material so that the third region maintains the metal properties to facilitate subsequent welding and maintain a high flow capacity.

In a possible embodiment, before the removing the first insulation material from the first region, the method further includes: cleaning the first insulation material off a surface of the first region; and covering the surface of the first region with the second insulation material.

In this embodiment of this application, the first region is filled with the first insulation material to prevent the second insulation material stuffed in the second region from entering the first region and affecting the deposition of metal particles in the first region. Before removing the first insulation material from the first region, by covering the surface of the first region with the second insulation material to make the first region become an interiorly conductive and superficially insulating structure, this application prevents metal particles from depositing on the surface of the first region, and prevents dendrites from growing on the surface of the first region and piercing the separator, thereby improving the safety performance of the battery cell.

In a possible embodiment, the disposing a first insulation material in the first region includes: filling the first region with paraffin.

In this embodiment of this application, the first region is filled with the first insulation material to prevent the insulation material stuffed in the second region from entering the first region and affecting conductivity of the first region. Being highly insulative and easily removable, the paraffin used as the first insulation material can maintain good conductivity of the first region.

In a possible embodiment, the removing the first insulation material from the first region includes: heating the first region to remove the paraffin from the first region.

In this embodiment of this application, the first region is filled with paraffin to maintain conductivity of the first region. The paraffin is removed by heating. This method is simple to operate and widely applicable in the production process.

In a possible embodiment, the disposing a third insulation material in the third region includes: filling the third region with paraffin.

In this embodiment of this application, the third region is filled with the third insulation material, so as to prevent the second insulation material stuffed in the second region and the negative active material stuffed in the interior of the first region from entering the third region. Being highly insulative and easily removable, the paraffin used as the third insulation material can maintain the metal properties of the third region.

In a possible embodiment, the disposing a negative active material in an interior of the first region includes: plating the first region with the negative active material by chemical plating.

In this embodiment of this application, the negative active material is disposed in the first region, so that the interior of the first region is favorable to nucleation and growth of metal particles. The first region is plated with the negative active material by chemical plating, so that the negative active material can be evenly distributed in the first region.

In a possible embodiment, the removing the third insulation material from the third region includes: heating the third region to remove the paraffin from the third region.

In this embodiment of this application, the paraffin in the third region is removed by heating, thereby maintaining good metal properties of the third region, facilitating subsequent welding, and maintaining a high flow capacity.

In a possible embodiment, the disposing a third insulation material in the third region includes: wrapping adhesive tape over the third region.

In this embodiment of this application, the third region is filled with the third insulation material, so as to prevent the insulation material stuffed in the second region and the negative active material stuffed in the interior of the first region from entering the third region. The adhesive tape wrapped over the third region is significantly effective in protecting the third region, and is simple to operate and cost-effective.

In a possible embodiment, the disposing a negative active material in an interior of the first region includes: plating the first region with the negative active material by physical plating.

In this embodiment of this application, the negative active material is disposed in the first region, so that the interior of the first region is favorable to nucleation and growth of metal particles. The first region is plated with the negative active material by physical plating, so that the negative active material can be evenly distributed in the first region.

In a possible embodiment, the removing the third insulation material from the third region includes: removing the adhesive tape from the third region.

In this embodiment of this application, the adhesive tape is directly removed from the third region, thereby maintaining good metal properties of the third region, facilitating subsequent welding, and maintaining a high flow capacity.

In a possible embodiment, the filling the second region with a second insulation material includes: filling the second region with the second insulation material by evaporation or magnetron sputtering.

In this embodiment of this application, the second insulation material is disposed in the second region to isolate the first region from the third region, so as to prevent metal particles from depositing in the third region, and avoid dendrite growth. Filling the second region with the second insulation material by evaporation or magnetron sputtering can make the insulation material evenly distributed in the second region and strengthen the isolation effect of the second region.

According to a third aspect, an electrode assembly is provided. The electrode assembly includes: the negative electrode plate disclosed in the preceding embodiment; a positive electrode plate; and a separator.

According to a fourth aspect, a battery cell is provided. The battery cell includes: the electrode assembly disclosed in the preceding embodiment; a housing with an opening, configured to accommodate the electrode assembly; and an end cap, configured to seal the opening.

According to a fifth aspect, a battery is provided. The battery includes the battery cell disclosed in the preceding embodiment.

According to a sixth aspect, an electrical device is provided. The electrical device includes the battery disclosed in the preceding embodiment. The battery is configured to provide electrical energy.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic structural exploded view of a battery according to an embodiment of this application;
FIG. 3 is a schematic diagram of a battery cell according to an embodiment of this application;
FIG. 4 is a schematic diagram of a negative electrode plate according to an embodiment of this application;
FIG. 5 is a schematic flowchart of preparing a negative electrode plate according to an embodiment of this application;
FIG. 6 is a schematic flowchart of preparing a negative electrode plate according to another embodiment of this application; and
FIG. 7 is a schematic flowchart of preparing a negative electrode plate according to still another embodiment of this application.

### List of reference numerals:

vehicle 1, battery 2, battery cell 3;
controller 11, motor 12, box 20, electrode assembly 31, shell 32, electrode terminal 33, connecting member 34, pressure relief mechanism 35; current collector 36;
first box portion 201, second box portion 202, accommodation space 203, housing 321, end cap 322, positive electrode terminal 331, negative electrode terminal 332, first region 361, second region 362, third region 363, first direction X.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

In this application, battery cells may include a lithium metal secondary battery, a sodium metal battery, a magnesium metal battery, or the like. The type of the battery cell is not limited herein. The battery cell may be in various shapes such as a cylinder, a flat body, or another shape. The shape of the battery cell is not limited herein. In terms of the packaging form, the battery cell is typically classed into three types: cylindrical battery cell, prismatic battery cell, and pouch-type battery cell. The type of the battery cell is not limited herein. For ease of description in the following embodiments, a lithium metal battery is used as an example.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

During the assembling of a battery, when a tab in the battery is bent, the tab may be short-circuited to another electrode, thereby causing an acute short circuit of the battery, and in turn, impairing the safety performance of the battery. Therefore, in the prior art, in order to prevent a short circuit of the tab, the tab is insulated by oxidation or adhesive coating. This reduces the probability of short circuits at the tab and improve the safety performance of the battery. Subsequently, the oxide layer is removed through high-frequency vibration of ultrasonic welding, so as to avoid a decline in the flow capacity of the tab.

However, in a battery that uses foamed metal as a negative electrode, the vibration will produce some insulation material particles. The insulating particles are difficult to remove, and remain inside the tab, thereby resulting in a decline in the battery performance and giving rise to safety hazards. Therefore, the above method in the prior art for enhancing the safety performance of the battery by insulating the tab is not applicable to a battery that uses foamed metal as a negative electrode.

In addition, in a battery that uses foamed metal as a negative electrode, the tab needs to be free from an active material (in a lithium metal battery, the active material here means a lithiophilic active material; in a sodium metal battery, the active material here means a lithiophilic active material, and so on). If an active material exists at the tab, metal particles will be deposited at the tab, resulting in uncontrolled growth of metal particles at the tab. On the one hand, this will lead to depletion of active metal and reduce the battery performance. On the other hand, dendrites arising from growth of surplus metal particles will pierce the separator to cause a short circuit and safety hazards of the battery.

In view of the above problems, an embodiment of this application provides a negative electrode plate. The negative electrode plate can make a tab region on the electrode plate maintain the properties of a metal material, ensure normal welding, and maintain a high flow capacity, and at the same time, prevent metal from growing in the tab region, thereby improving the safety performance of the battery.

The negative electrode plate described in embodiments of this application is applicable to electrode assemblies, battery cells, batteries, and electrical devices that use a battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in embodiments of this application.

For ease of description in the following embodiments, a vehicle is used as an example of the electrical device.

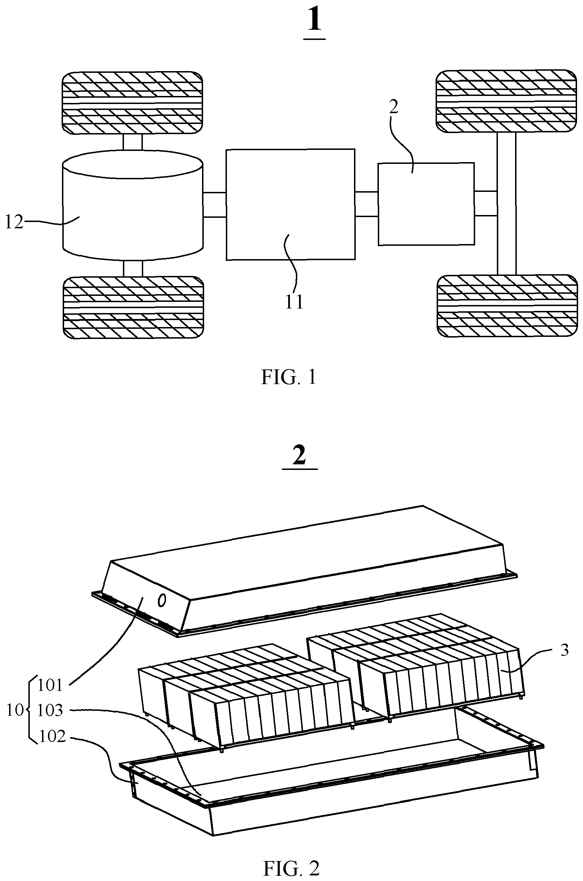

FIG. 1 is a schematic structural diagram of a vehicle 1 according to an embodiment of this application. As shown in FIG. 1, a battery 2 is disposed inside the vehicle 1. The battery 2 may be disposed at the bottom, front, or rear of the vehicle 1. The battery 2 may be configured to supply power to the vehicle 1. For example, the battery 2 may serve as an operating power supply of the vehicle 1.

The vehicle 1 may further include a controller 11 and a motor 12. The controller 11 is configured to control the battery 2 to supply power to the motor 12, for example, to meet electrical energy requirements in starting, navigating, or running the vehicle 1.

In some embodiments of this application, the battery 2 serves not only as an operating power supply of the vehicle 1, but may also serve as a driving power supply of the vehicle 1 to provide driving power for the vehicle 1 in place of or partly in place of fuel oil or natural gas.

FIG. 2 is a schematic exploded view of a battery 2 according to an embodiment of this application. As shown in FIG. 2, the battery 2 includes a box 20 and a battery cell 3. The battery cell 3 is accommodated in the box 20.

The box 20 is configured to accommodate the battery cell 3. The box 20 may be in diverse structures. In some embodiments, the box 20 may include a first box portion 201 and a second box portion 202. The first box portion 201 and the second box portion 202 fit each other. The first box portion 201 and the second box portion 202 together define an accommodation space 203 configured to accommodate the battery cell 3. The second box portion 202 may be a hollow structure opened at one end. The first box portion 201 is a plate structure. The first box portion 201 fits and covers the opening of the second box portion 202 to form the box 20 that includes the accommodation space 203. Alternatively, the first box portion 201 and the second box portion 202 each may be a hollow structure opened at one end. The opening of the first box portion 201 fits the opening of the second box portion 202 to form the box 20 that includes the accommodation space 203. Definitely, the first box portion 201 and the second box portion 202 may be in various shapes, such as a cylinder or a cuboid.

To improve airtightness between the first box portion 201 and the second box portion 202 that are connected, a sealing element such as a sealant or a sealing ring may be disposed between the first box portion 201 and the second box portion 202.

Assuming that the first box portion 201 fits on the top of the second box portion 202, the first box portion 201 may also be referred to as an upper box, and the second box portion 202 may also be referred to as a lower box.

There may be a plurality of battery cells 3 in the battery 2. The plurality of battery cells 3 may be connected in series, parallel, or series-and-parallel pattern. The series-and-parallel pattern means a combination of series connection and parallel connection of the plurality of battery cells 3. The plurality of battery cells 3 may be directly connected in series, parallel, or series-and-parallel pattern, and then the whole of the plurality of battery cells 3 may be accommodated in the box 20. Alternatively, the plurality of battery cells 3 may be connected in series, parallel, or series-and-parallel pattern to form a battery module (not shown in the drawing) first. A plurality of battery modules are then connected in series, parallel, or series-and-parallel pattern to form a whole for being accommodated in the box 20. The plurality of battery cells 3 in the battery module may be electrically connected by a busbar component, so as to implement parallel, series, or series-and-parallel connection between the plurality of battery cells 3 in the battery module.

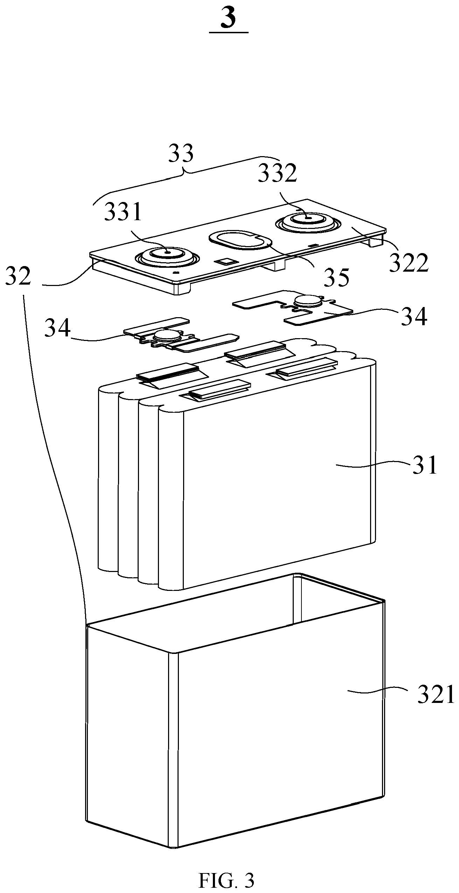

As shown in FIG. 3, which is a schematic structural diagram of a battery cell 3 according to an embodiment of this application, the battery cell 3 includes one or more electrode assemblies 31, a housing 321, and an end cap 322. The housing 321 and the end cap 322 form a shell or a battery box 32. Both the wall of the housing 321 and the end cap 322 are referred to as walls of the battery cell 3. For a cuboidal battery cell 3, the walls of the housing 321 include a bottom wall and four sidewalls. The shape of the housing 321 is determined depending on the shape of a combination of one or more electrode assemblies 31. For example, the housing 321 may be a hollow cuboid or cube or cylinder. One surface of the housing 321 is provided with an opening through which one or more electrode assemblies 31 can be placed into the housing 321 conveniently. For example, when the housing 321 is a hollow cuboid or cube, one of faces of the housing 321 is an opened face. The opened face is not walled so that the inside of the housing 321 communicates with the outside. When the housing 321 is a hollow cylinder, an end face of the housing 321 may be an opened face. That is, this end face is not walled so that the inside of the housing 321 communicates with the outside. The end cap 322 covers the opening and is connected to the housing 321 to form a closed cavity that is configured to accommodate the electrode assembly 31. The housing 321 is filled with an electrolyte such as an electrolytic solution.

The battery cell 3 may further include two electrode terminals 33. The two electrode terminals 33 may be disposed on the end cap 322. The end cap 322 is generally in the shape of a flat plate. Two electrode terminals 33 are fixed onto a flat surface of the end cap 322. The two electrode terminals 33 are a positive electrode terminal 331 and a negative electrode terminal 332 respectively. A connecting member 34, also referred to as a current collection component 34, is disposed corresponding to each electrode terminal 33, located between the end cap 322 and the electrode assembly 31, and configured to electrically connect the electrode assembly 31 and the electrode terminal 33.

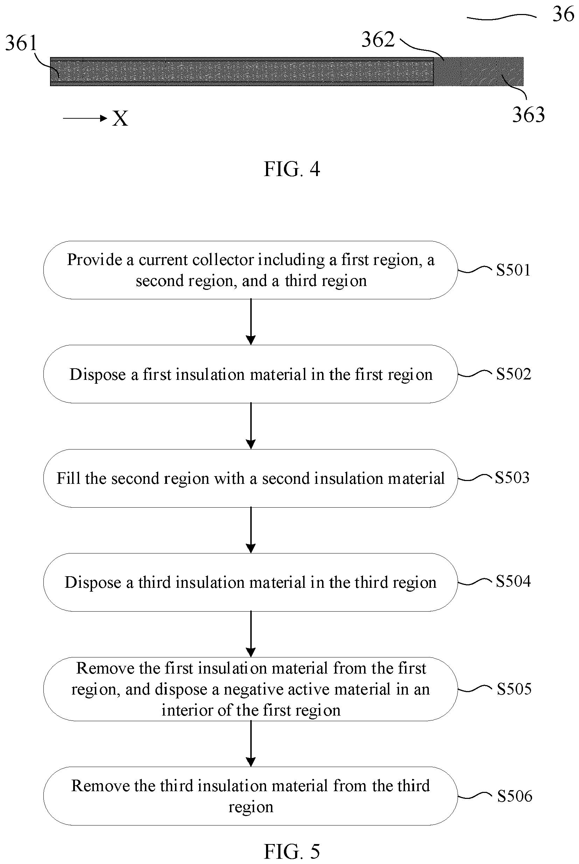

In the battery cell 3, one or more electrode assemblies 31 may be disposed depending on actual use requirements. As shown in FIG. 3, 4 independent electrode assemblies 31 are disposed in the battery cell 3.

A pressure relief mechanism 35 may be disposed on the battery cell 3. The pressure relief mechanism 35 is configured to be actuated to relieve an internal pressure or temperature when the internal pressure or temperature of the battery cell 3 reaches a threshold.

The pressure relief mechanism 35 may be any of various possible pressure relief structures, without being limited in this embodiment of this application. For example, the pressure relief mechanism 35 may be a temperature-sensitive pressure relief mechanism. The temperature-sensitive pressure relief mechanism is configured to melt when the internal temperature of the battery cell 3 equipped with the pressure relief mechanism 35 reaches a threshold; and/or, the pressure relief mechanism 35 may be a pressure-sensitive pressure relief mechanism. The pressure-sensitive pressure relief mechanism is configured to rupture when the internal air pressure of the battery cell 3 equipped with the pressure relief mechanism 35 reaches a threshold.

FIG. 4 is a schematic structural diagram of a negative electrode plate according to an embodiment of this application. The negative electrode plate includes a current collector 36. The current collector 36 is made of a foamed metal material. The current collector 36 includes a first region 361, a second region 362, and a third region 363 arranged sequentially along a first direction X. An interior of the first region 361 is provided with a negative active material. The second region 362 is filled with an insulation material. The third region 363 is provided with no negative active material.

In this embodiment of this application, foamed metal means a metal material with foam pores. The foamed metal is of a high porosity, and contains large-sized foam pores. Therefore, a negative current collector prepared from the foamed metal provides growth space for metal particles, and allows metal particles to deposit in the foamed metal material.

In this embodiment of this application, the negative active material is a material of close affinity to metal particles. Examples of the material are: metal phosphides such as copper phosphide, nickel, titanium, cobalt, and iron; oxides such as copper oxide, aluminum oxide, zinc oxide, and silicon dioxide; metal elements such as gold, silver, zinc, silicon, magnesium, and calcium; carbon materials such as carbon nanotubes, graphene, fullerene, and activated carbon; metal sulfides such as Mo(SₓSe₁₋ₓ)₂ and W(SₓSe₁₋ₓ)₂; lithium-containing substances such as Li₂S_{y}, LiX, Li₂O, and Li₃N, where, in LiX, X = F, Cl, Br, or I, and, in Li₂S_{y}, y = 1 to 8; inorganic solid electrolytes such as Li₂₊₂ₓZn₁₋ₓGeO₄, Li₁₄Zn(GeO₄)₄, and the like. The above substances are merely examples but not exhaustive. Any material of close affinity to the metal in the metal battery may be used as a negative active material as long as the material facilitates deposition of metal particles in the negative current collector.

In the technical solution above, the first region 361, the second region 362, and the third region 363 are arranged sequentially along the first direction X. The interior of the first region 361 is provided with the negative active material to facilitate nucleation and growth of metal particles inside the first region 361. The second region 362 is filled with the insulation material so that the second region 362 physically isolates the first region 361 from the third region 363. The third region 363 is provided with no negative active material so that the third region 363 maintains the metal properties. The negative electrode plate 36 is divided into three different regions, and the second region 362 filled with the insulation material is located between the first region 361 and the third region 363 to isolate the first region 361 from the third region 363, thereby ensuring that no metal particles are deposited in the third region 363. This ensures that no metal particles are deposited in a tab region in a battery cell 3 that uses foamed metal as a negative electrode, avoids a short circuit of a battery cell 3 caused by dendrites arising from surplus metal particles deposited in the tab region, and in turn, enhances safety performance of the battery cell 3. In addition, the tab region can maintain metal properties to facilitate welding and maintain a high flow capacity.

Optionally, the surface of the first region 361 is covered with an insulation material.

The interior of the first region 361 is provided with the negative active material to facilitate growth of metal particles inside the first region. In a battery cell 3 that uses foamed metal as a negative electrode, metal particles are more easily grown on the surface of the first region 361 than in the interior of the first region 361, and the metal particles are deposited only on the surface of the first region 361. If surplus metal particles are deposited on the surface of the first region 361, the surplus metal particles will form dendrites and pierce the separator, thereby causing a short circuit or open circuit of the battery cell 3.

In the technical solution above, by covering the surface of the first region 361 with the insulation material, the metal particles are deposited only in the interior of the first region 361, and the metal particles are prevented from depositing on the surface of the first region 361, thereby preventing the separator from being pierced by the dendrites arising from surplus metal particles deposited on the surface of the first region 361, and in turn, enhancing safety performance of the battery cell 3.

Optionally, the insulation material is aluminum oxide or zirconium oxide.

Aluminum oxide is a compound of high stability and high hardness, and melts at 2054 °C and boils at 2980 °C. Zirconium oxide is a high-melting material that is chemically inactive and resistant to high temperature. Both aluminum oxide and zirconium oxide are desirable insulation materials. In this embodiment of this application, the surface of the first region 361 is covered with aluminum oxide or zirconium oxide to prevent the metal particles from depositing on the surface of the first region 361. However, the insulation material may be other materials instead, and the types of the insulation material are not limited herein.

In the technical solution above, in order to prevent the separator from being pierced by the dendrites formed by the metal particles deposited on the surface of the first region 361, the surface of the first region 361 is covered with the insulation material so that the metal particles are not deposited on the surface of the first region 361 but are deposited in the interior of the first region 361. Both aluminum oxide and zirconium oxide are materials of good insulation properties and exhibit highly stable performance in all aspects. The surface of the first region 361 covered with aluminum oxide or zirconium oxide can effectively prevent the metal particles from depositing on the surface of the first region 361, and make the first region 361 become a superficially insulating and interiorly conductive structure.

Optionally, the width of the second region 362 in the first direction X is not less than the thickness of the current collector 36.

The second region 362 is filled with the insulation material to isolate the first region 361 from the third region 363 and prevent the metal particles from depositing in the third region 363. If the width of the second region 362 in the first direction X is less than the thickness of the current collector 36, the metal particles may still deposit in the third region 363, and metal dendrites may still grow in the third region 363. In other words, if the width of the second region 362 in the first direction X is less than the thickness of the current collector 36, the second region 362 is unable to effectively isolate the first region 361 from the third region 363.

In the technical solution above, the width of the second region 362 in the first direction X is controlled to be not less than the thickness of the current collector 36, thereby allowing the second region 362 to effectively isolate the first region 361 from the third region 363, ensuring that no metal dendrites are grown in the third region 363, and protecting the third region 363 from depositing metal particles.

Optionally, in the first direction X, the width of the second region 362 is not greater than 10% of the width of the first region 361.

As mentioned above, in order for the second region 362 to more effectively isolate the first region 361 from the third region 363, the width of the second region 362 in the first direction X needs to be not less than the thickness of the current collector 36. However, when the width of the second region 362 in the first direction X is unduly large, although the isolation effect is good, the surplus current collector material will be wasted, thereby increasing the cost of the battery cell 3 and decreasing the energy density.

In the technical solution above, in the first direction X, on the premise of ensuring that the width of the second region 362 is not less than the thickness of the current collector 36, the width of the second region 362 is controlled to be not greater than 10% of the width of the first region 361. In this way, the second region 362 can effectively isolate the first region 361 from the third region 363 to prevent metal particles from depositing in the third region 363. In addition, waste of surplus current collector material is avoided, so as to ensure relatively low production cost and a relatively high energy density of the battery cell 3.

Optionally, in the first direction X, the width of the third region 363 is not greater than 20% of the width of the first region 361.

In the battery cell 3, if the width of the third region 363 in the first direction X is unduly large, the surplus current collector material will be wasted, thereby increasing the cost of the battery cell 3 and decreasing the energy density.

In the technical solution above, in the first direction X, the width of the third region 363 is controlled to be not greater than 20% of the width of the first region 361. In this way, waste of surplus current collector material is avoided, so as to ensure relatively low production cost and a relatively high energy density of the battery cell 3.

Optionally, the second region 362 includes a first part and a second part. The first part and the first region 361 form a main body of the electrode plate. The second part and the third region 363 form a tab of the electrode plate. A width of the first part in the first direction X is not greater than a half of a thickness of the electrode plate.

The second region 362 filled with an insulation material includes a first part and a second part. The first part is located in the main region of the electrode plate. The second part is located in the tab region of the electrode plate. In order to maintain the metal properties of the third region 363 without metal particles deposited inside the third region, the tab part needs to include a part of the second region 362. In order to prevent the tab region from directly lapping the first region 361 to cause a short circuit, the main region needs to include a part of the second region 362. In order to facilitate welding and maintain a high flow capacity in the tab region, the tab region needs to include the third region 363.

In the technical solution above, the negative electrode plate includes a main region and a tab region. The main region includes the first region 361 and the first part. The tab region includes the third region 363 and the second part. If the width of the first part included in the main region in the first direction X is less than a half of the thickness of the electrode plate, the second part of the tab region is unable to truly protect the third region 363. Therefore, the width of the first part of the second region 362 in the first direction X is controlled to be not less than a half of the thickness of the electrode plate. In this way, the third region 363 of the tab maintains metal properties, and the tab region facilitates welding and maintains a high flow capacity.

Optionally, the width of the first part in the first direction X is not less than 6 µm.

The second region 362 interiorly filled with an insulation material includes a first part and a second part. The first part is located in the main region of the electrode plate. The second part is located in the tab region of the electrode plate. If the width of the first part included in the main region in the first direction X is less than 6 µm, the first part of the main region is unable to truly protect the third region 363.

In the technical solution above, the width of the first part of the second region 362 in the first direction X is controlled to be not less than 6 µm. In this way, the third region 363 of the tab maintains metal properties and is free from metal particles deposited inside, and the tab can be welded conveniently and maintain a high flow capacity.

Optionally, in the first direction X, the width of the first part is not greater than 5% of the width of the first region 361.

In order for the first part to more effectively isolate the first region 361 from the tab region, the width of the first part in the first direction X is not less than the thickness of the current collector 36, and not less than 6 µm. However, when the width of the first part in the first direction X is unduly large, the surplus current collector material will be wasted, thereby increasing the cost of the battery cell 3 and decreasing the energy density.

In the technical solution above, in the first direction X, the width of the first part is controlled to be not greater than 5% of the width of the first region 361. In this way, the first part can well isolate the first region 361 from the tab to prevent metal particles from depositing in the third region 363 in the tab. In addition, waste of surplus current collector material is avoided, so as to ensure relatively low production cost and a relatively high energy density of the battery cell 3.

Optionally, the electrode plate includes two sections of the second region 362. The two sections of the second region 362 are distributed on two sides of the first region 361 respectively.

In this embodiment of this application, the positive electrode in the battery cell 3 wraps the negative electrode. To be specific, the positive electrode completely wraps the first region 361 in the negative electrode, so that the edge of the positive electrode laps the second region 362 of the negative electrode. During the production, it is somewhat difficult to make the edge of the positive electrode just lap the narrower second region 362 instead of the first region 361 and the third region 363.

In the technical solution above, for convenience in the production process, the electrode plate may include two sections of the second region 362. The two sections of the second region 362 are distributed on two sides of the first region 361 respectively. In this way, the matching manner between the negative electrode and the positive electrode is not particularly limited, thereby saving production cost and improving production efficiency.

Optionally, the foamed metal is foamed copper.

In the technical solution above, the foamed metal is used as a negative electrode material of the battery cell 3. The foamed metal being foamed copper means that foamed copper is used as a negative electrode material of the battery cell 3. When the foamed copper is used as the negative electrode material of the battery cell 3, the performance of the battery cell 3 can be enhanced.

Optionally, the thickness of the electrode plate is 50 µm to 400 µm.

In the technical solution above, the thickness of the electrode plate is kept between 50 µm to 400 µm, thereby providing sufficient deposition space for the metal particles, and maintaining good performance of the battery cell 3.

FIG. 5 is a schematic flowchart of preparing a negative electrode plate according to an embodiment of this application. As shown in FIG. 5, the preparation method includes the following steps:
S501: Providing a current collector 36, where the current collector 36 includes a first region 361, a second region 362, and a third region 363 arranged sequentially along a first direction, and the current collector 36 is made of a foamed metal material;
S502: Disposing a first insulation material in the first region 361;
S503: Filling the second region 362 with a second insulation material;
S504: Disposing a third insulation material in the third region 363;
S505: Removing the first insulation material from the first region 361, and disposing a negative active material in the interior of the first region 361; and
S506: Removing the third insulation material from the third region 363 to obtain a negative electrode plate provided with the negative active material in the interior of the first region 361, filled with the second insulation material in the second region 362, and provided with no negative active material in the third region 363.

In the technical solution above, the interior of the first region 361 is provided with the negative active material to facilitate metal nucleation and growth inside the first region 361. The second region 362 is filled with the second insulation material so that the second region 362 isolates the first region 361 from the third region 363 to prevent metal particles from depositing in the third region 363. The third region 363 is provided with no negative active material so that the third region 363 maintains the metal properties to facilitate subsequent welding and maintain a high flow capacity.

Optionally, before removing the first insulation material from the first region 361, the method further includes: cleaning the first insulation material off the surface of the first region 361; and covering the surface of the first region 361 with the second insulation material.

The first region 361 is filled with the first insulation material to prevent the second insulation material stuffed in the second region 362 from entering the first region 361 and affecting the deposition of metal particles in the first region 361. To prevent metal particles from depositing on the surface of the first region 361 and growing dendrites on the surface of the first region 361 to impair the safety performance of the battery cell 3, the surface of the first region 361 needs to be covered with an insulation material so that the metal particles are not deposited on the surface of the first region 361.

In the technical solution above, by covering the surface of the first region 361 with the second insulation material to make the first region 361 become an interiorly conductive and superficially insulating structure, this application prevents metal particles from depositing on the surface of the first region 361, and prevents dendrites from growing on the surface of the first region 361 and piercing the separator, thereby improving the safety performance of the battery cell 3.

Optionally, the disposing a first insulation material in the first region 361 includes: filling the first region 361 with paraffin.

Paraffin is a non-polar solvent soluble in gasoline, carbon disulfide, carbon tetrachloride, and the like, melts at a low melting point and may serve as a coating material on a baking container and an insulation material for electrical components to improve anti-aging properties and flexibility of rubber, and the like.

In the technical solution above, the first region 361 is filled with the first insulation material to prevent the second insulation material stuffed in the second region 362 from entering the first region 361 and affecting the conductivity of the first region 361. Being highly insulative and easily removable, the paraffin used as the first insulation material can maintain good conductivity of the first region 361.

Optionally, the removing the first insulation material from the first region 361 includes: heating the first region 361 to remove the paraffin from the first region 361.

Before the second insulation material is disposed in the second region 362, the first region 361 is filled with paraffin to protect the first region 361 from being filled with the second insulation material. After the second insulation material is disposed in the second region 362, the first region is heated to remove the paraffin by taking advantage of the low melting point of the paraffin, so as to restore the first region 361 to the original status.

In the technical solution above, the first region 361 is filled with paraffin to maintain conductivity of the first region 361. The paraffin is removed by heating. This method is simple to operate and widely applicable in the production process.

Optionally, the disposing a third insulation material in the third region 363 includes: filling the third region 363 with paraffin.

The second region 362 needs to be provided with a second insulation material to isolate the first region 361 from the third region 362. The first region 361 needs to be provided with a negative active material to make it easier to deposit the metal particles inside the first region 361. The third region 363 is a tab region of the battery cell 3. In order to facilitate subsequent welding and maintain a high flow capacity, the third region needs to maintain metal properties without being subjected to any insulation treatment or provided with any active material.

In the technical solution above, the third region 363 is filled with the third insulation material, so as to prevent the second insulation material stuffed in the second region 362 and the negative active material stuffed in the interior of the first region 361 from entering the third region 363. Being highly insulative and easily removable, the paraffin used as the third insulation material can maintain the metal properties of the third region 363.

Optionally, the disposing a negative active material in the interior of the first region 361 includes: plating the first region 361 with the negative active material by chemical plating.

Chemical plating is a method for producing or depositing a thin film on a material by chemical means. For example, in this embodiment of this application, the first region 361 may be plated with a negative active material by electroplating.

In the technical solution above, the negative active material is disposed in the first region 361, so that the interior of the first region 361 is favorable to nucleation and growth of metal particles. The first region 361 is plated with the negative active material by chemical plating, so that the negative active material can be evenly distributed in the first region 361.

Optionally, the removing the third insulation material from the third region 363 includes: heating the third region 363 to remove the paraffin from the third region 363.

In the technical solution above, the paraffin in the third region 363 is removed by heating, thereby maintaining good metal properties of the third region 363, facilitating subsequent welding, and maintaining a high flow capacity.

Optionally, the disposing a third insulation material in the third region 363 includes: wrapping adhesive tape over the third region 363.

In this embodiment of this application, the adhesive tape may be made of any material. The material of the adhesive tape is not limited herein. The adhesive tape wraps over the third region 363, so as to prevent the second insulation material stuffed in the second region 362 and the negative active material stuffed in the interior of the first region 361 from entering the third region 363.

In the technical solution above, the adhesive tape wrapped over the third region 363 is significantly effective in protecting the third region 363, and is simple to operate and cost-effective.

Optionally, the disposing a negative active material in the interior of the first region 361 includes: plating the first region 361 with the negative active material by physical plating.

In this embodiment of this application, the first region 361 may be plated with the negative active material by evaporation or magnetron sputtering.

In the technical solution above, the negative active material is disposed in the first region 361, so that the interior of the first region 361 is favorable to nucleation and growth of metal particles. The first region 361 is plated with the negative active material by physical plating, so that the negative active material can be evenly distributed in the first region 361.

Optionally, the removing the third insulation material from the third region 363 includes: removing the adhesive tape from the third region 363.

In the technical solution above, the adhesive tape in the third region 363 is removed directly, thereby maintaining good metal properties of the third region 363, facilitating subsequent welding, and maintaining a high flow capacity.

Optionally, the filling the second region 362 with a second insulation material includes: filling the second region 362 with the second insulation material by evaporation or magnetron sputtering.

Evaporation is a process of depositing a thin film by heating and evaporating a source material (also referred to as a film material) in a vacuum. The source material is vaporized into vapor particles that travel directly to the surface of a substrate and then condense into a film. By filling the second region 362 with the second insulation material by evaporation, the technical solution in this embodiment of this application exhibits the advantages of a simple method of film formation, a high purity and high density of the thin film, a unique film structure, superior performance, and the like. Magnetron sputtering is a type of physical vapor deposition. A general sputtering method is applicable to preparing diverse materials such as metals, semiconductors, and insulators. By filling the second region 362 with the second insulation material by magnetron sputtering, the technical solution in this embodiment of this application exhibits the advantages such as simple equipment, easy control, a large coating area, strong adhesion, and the like. In this embodiment of this application, the second region 362 may be filled with the second insulation material by other means instead. The filling manner is not limited herein.

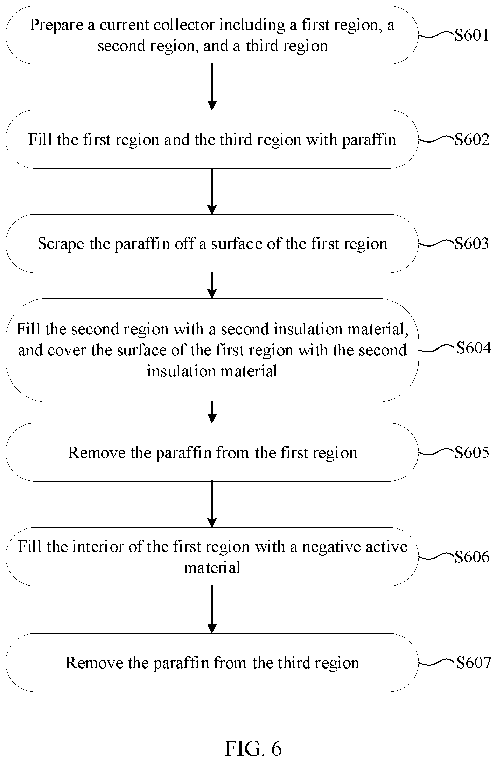

FIG. 6 is a schematic flowchart of preparing a negative electrode plate according to another embodiment of this application. As shown in FIG. 6, the negative electrode plate may be prepared by the following steps:
S601: Preparing a negative current collector 36 containing no treated foamed metal material;
S602: Filling the first region 361 and the third region 363 of the negative current collector 36 with paraffin;
S603: Scraping the paraffin off the surface of the first region 361;
S604: Filling the second region 362 of the negative current collector 36 with the second insulation material by low-temperature evaporation or low-temperature magnetron sputtering, and covering the surface of the first region 361 with the second insulation material;
S605: Removing the paraffin from the first region 361 by heating or by cleaning with an organic compound;
S606: Filling the interior of the first region 361 with a negative active material by electroplating; and
S607: Removing the paraffin from the third region 363 by heating or by cleaning with an organic compound.

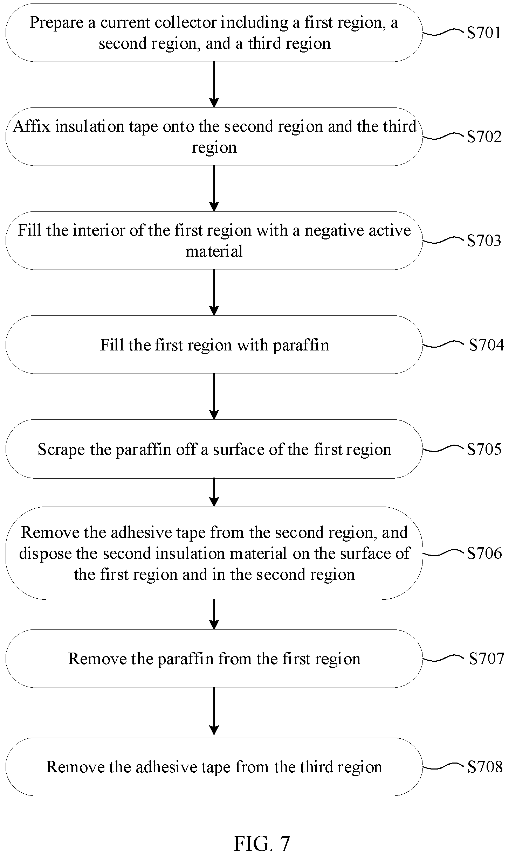

FIG. 7 is a schematic flowchart of preparing a negative electrode plate according to still another embodiment of this application. As shown in FIG. 7, the negative electrode plate may be prepared by the following steps:
S701: Preparing a negative current collector 36 containing no treated foamed metal material;
S702: Affixing insulation tape onto the second region 362 and the third region 363 of the negative current collector 36;
S703: Filling the interior of the first region 361 with a negative active material by low-temperature evaporation or low-temperature magnetron sputtering;
S704: Filling the first region 361 with paraffin;
S705: Scraping the paraffin off the surface of the first region 361;
S706: Removing the adhesive tape from the second region 362, and disposing the second insulation material on the surface of the first region 361 and in the second region 362 of the negative current collector 36 by low-temperature evaporation or low-temperature magnetron sputtering;
S707: Removing the paraffin from the first region 361 by heating or by cleaning with an organic compound; and
S708: Removing the adhesive tape from the third region 363.

The above steps for preparing a negative electrode plate are merely examples. As long as the negative electrode plate described in the above embodiment is finally obtained, the above preparation steps may be freely combined, without being limited herein.

An embodiment of this application further provides an electrode assembly 31. The electrode assembly includes: the negative electrode plate disclosed in the preceding embodiment; a positive electrode plate; and a separator.

An embodiment of this application further provides a battery cell 3. The battery cell includes: the electrode assembly 31 disclosed in the preceding embodiment; a housing 321 with an opening, configured to accommodate the electrode assembly 31; and an end cap 322, configured to seal the opening.

An embodiment of this application further provides a battery 2. The battery includes the battery cell 3 disclosed in the preceding embodiment.

An embodiment of this application further provides an electrical device. The electrical device includes the battery 2 disclosed in the preceding embodiment. The battery 2 is configured to provide electrical energy.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A negative electrode plate, **characterized in that** the negative electrode plate comprises:
a current collector, wherein the current collector is made of a foamed metal material; and
the current collector comprises a first region, a second region, and a third region arranged sequentially along a first direction, an interior of the first region is provided with a negative active material, the second region (362) is filled with an insulation material, and the third region is provided with no negative active material.

2. The negative electrode plate according to claim 1, **characterized in that** a surface of the first region is covered with the insulation material.

3. The negative electrode plate according to claim 2, **characterized in that** the insulation material is aluminum oxide or zirconium oxide.

4. The negative electrode plate according to any one of claims 1 to 3, **characterized in that** a width of the second region in the first direction is not less than a thickness of the current collector.

5. The negative electrode plate according to any one of claims 1 to 4, **characterized in that**, in the first direction, a width of the second region is not greater than 10% of a width of the first region.

6. The negative electrode plate according to any one of claims 1 to 5, **characterized in that**, in the first direction, a width of the third region is not greater than 20% of a width of the first region.

7. The negative electrode plate according to any one of claims 1 to 6, **characterized in that** the second region comprises a first part and a second part, the first part and the first region form a main body of the electrode plate, the second part and the third region form a tab of the electrode plate, and a width of the first part in the first direction is not less than a half of a thickness of the electrode plate.

8. The negative electrode plate according to claim 7, **characterized in that** a width of the first part in the first direction is not less than 6 µm.

9. The negative electrode plate according to claim 7 or 8, **characterized in that**, in the first direction, the width of the first part is not greater than 5% of a width of the first region.

10. The negative electrode plate according to any one of claims 1 to 9, **characterized in that**, the electrode plate comprises two sections of the second region, and the two sections of the second region are distributed on two sides of the first region respectively.

11. The negative electrode plate according to any one of claims 1 to 10, **characterized in that** the foamed metal is foamed copper.

12. The negative electrode plate according to any one of claims 1 to 11, **characterized in that** a thickness of the electrode plate is 50 µm to 400 µm.

13. A method for preparing a negative electrode plate, **characterized in that** the method comprises:
providing a current collector, wherein the current collector comprises a first region, a second region, and a third region arranged sequentially along a first direction, and the current collector is made of a foamed metal material;
disposing a first insulation material in the first region, filling the second region with a second insulation material, and disposing a third insulation material in the third region;
removing the first insulation material from the first region, and disposing a negative active material in an interior of the first region; and
removing the third insulation material from the third region to obtain a negative electrode plate provided with the negative active material in the interior of the first region, filled with the second insulation material in the second region, and provided with no negative active material in the third region.

14. The method according to claim 13, **characterized in that**, before the removing the first insulation material from the first region, the method further comprises:
cleaning the first insulation material off a surface of the first region; and
covering the surface of the first region with the second insulation material.

15. The method according to claim 13 or 14, **characterized in that** the disposing a first insulation material in the first region comprises: filling the first region with paraffin.

16. The method according to claim 15, **characterized in that** the removing the first insulation material from the first region comprises:
heating the first region to remove the paraffin from the first region.

17. The method according to claim 15 or 16, **characterized in that** the disposing a third insulation material in the third region comprises:
filling the third region with paraffin.

18. The method according to claim 17, **characterized in that** the disposing a negative active material in an interior of the first region comprises:
plating the first region with the negative active material by chemical plating.

19. The method according to claim 17 or 18, **characterized in that** the removing the third insulation material from the third region comprises:
heating the third region to remove the paraffin from the third region.

20. The method according to claim 15 or 16, **characterized in that** the disposing a third insulation material in the third region comprises:
wrapping adhesive tape over the third region.

21. The method according to claim 20, **characterized in that** the disposing a negative active material in an interior of the first region comprises:
plating the first region with the negative active material by physical plating.

22. The method according to claim 20 or 21, **characterized in that** the removing the third insulation material from the third region comprises:
removing the adhesive tape from the third region.

23. The method according to any one of claims 13 to 22, **characterized in that** the filling the second region with a second insulation material comprises:
filling the second region with the second insulation material by evaporation or magnetron sputtering.

24. An electrode assembly, **characterized in that** the electrode assembly comprises:
the negative electrode plate according to any one of claims 1 to 12;
a positive electrode plate; and
a separator.

25. A battery cell, **characterized in that** the battery cell comprises:
the electrode assembly according to claim 24;
a housing with an opening, configured to accommodate the electrode assembly; and
an end cap, configured to seal the opening.

26. A battery, **characterized in that** the battery comprises:
a plurality of the battery cells according to claim 25.

27. An electrical device, **characterized in that** the electrical device comprises:
the battery according to claim 26, wherein the battery is configured to provide electrical energy.
